# EUROPEAN PATENT APPLICATION

(11) **EP 0 582 536 A1**
(43) Date of publication of application: **09.02.1994**
(21) Application number: 93480071.5
(22) Date of filing: 15.06.1993
(51) Int. Cl.: G06F 3/023

(54) **Method of and apparatus for providing automatic response actions for preexisting user input procedures**

(30) Priority: 27.07.1992 US 919431
(71) Applicant: International Business Machines Corporation, Armonk, N.Y. 10504 (US)
(72) Inventor: Williams, Marvin L., Lewisville, TX 76067 (US); Johnson, William J., Flower Mound, TX 75028 (US)
(74) Representative: de Pena, Alain

(57) **Abstract**

Manual user inputs performed by a user of a data processing system are monitored and compared to preexisting user input macros which can perform the manual user inputs on behalf of the user. Upon detection of manual user inputs that are identical or similar to the preexisting user inputs, a user is notified of the preexisting macro that can perform the sequence of manual user inputs. A service component allows the notification to take place via an alternative media not used by the macro, thus avoiding the propensity of obstructing the media used by the preexisting macro.

## Description

This invention relates in general to data processing systems, and in particular to a method of, and apparatus for, detecting user input sequences for which a preexisting procedure may be executed in lieu of the user input sequence.

Conventional data processing systems provide a variety of means for the recording of user inputs specified by a user. Such systems include historical and archival methods to record user inputs from a user. Such systems also allow the recorded user inputs to be executed by the data processing system without the user having to re-enter inputs. The term "user input" is used to describe any operations by a user to direct a request or a command to a data processing system, such as keystrokes entered or electronic mouse events performed manually by the user. Recent systems, such as MicrosoftTM Windows even allow the capability of mouse cursor movements to be recorded for subsequent re-execution of the events initiated by the mouse cursor. However, such systems do not provide a method for recognizing when the user has inadvertently or advertently performed a sequence of manual user inputs for which a prerecorded or automatic procedure exists.

Existing systems include the International Business Machines Corporation (IBM) DisplayWriteTM key macro commands. Key macro commands allow a user to record a series of keystrokes which the user can later reproduce by specifying a single keystroke. For example, a user may repetitively delete a paragraph from a document. The keystroke sequence, ALT-F4 for Block mode, CTRL-END for End of paragraph, and Delete can be defined under one keystroke combination such as ALT-D. This permits the keystroke ALT-D to emulate the sequence of keystrokes ALT-F4, CTRL-END, ALT-D to the keyboard buffer, thus executing a delete paragraph operation on behalf of the user.

Other automatic keystroke capture systems include the Disk Operating System (DOS) and Operating System 2 (OS/2TM) command line buffers. These command line buffers allow the user to reissue a series of keystrokes that were previously executed and recorded from the command line buffer. Such keyboard macros and command line buffers are well established in the prior art. However, a need exists for detection of a sequence of manual keystrokes corresponding to a key macro and for notification to the user on the availability of the key macro.

The need for such recognition and notification capabilities is especially made prevalent in Voice Recognition systems, although the need is not limited to Voice Recognition systems. Existing Voice Recognition systems utilize the human voice as the primary mode of entering commands into a data processing system. Since an abundance of current software applications utilize the keyboard as the primary mode of user input, these applications may be retrofitted with Voice Recognition processing systems. These Voice Recognition systems construct voice command templates by allowing the user to record a series of voice imprints, i.e., digitized sonograms, to associate the voice imprints with specific keystrokes. These voice imprints are subsequently compared to the user's vocal commands. Upon the Voice Recognition system receiving a voice command for which there is sufficient confidence in the matching pattern to the predefined sonograms, the key-strokes associated with the sonograms are emulated into the keyboard buffer. Thus, the existing Voice Recognition systems provide a method by which a Voice Recognition system can be utilized on existing keyboard based applications. Often, in the construction of these voice command templates, i.e., a set of sonograms-to-commands, a user must be familiar with the application. Moreover, to efficiently utilize the capabilities of the Voice Recognition system, the user may have to be knowledgeable of the complete set of all currently active voice command templates within the data processing system. Such a problem also exists for conventional keystroke macros, that is, the user must know the keystroke macros that are available and that can be executed on behalf of the user.

Existing systems may also obstruct the currently operating application's visual presentation. Some existing systems, such as COVOXTM VoiceKey, allow for the application to be overshadowed with a list of textual commentaries of current voice commands available. Such a method often obstructs the visual presentation of the currently operating application's visual presentations. These systems merely display the information and do not notify the user that manual user inputs may have been unnecessary. Thus, users may be entering a sequence of manual user inputs for which a macro exists. The user has no means for negative reinforcement to be delivered for the behavior of manually entering a sequence of user inputs for which a succinct operation exists in lieu of the sequence of user inputs.

It should therefore be apparent that a need exists for a method and a system by which differing media can be utilized to convey to a user of a data processing system that a sequence of manually entered user inputs was unnecessarily entered and for which the notification may be redirected to a media that offers no obstruction to the currently operating application.

With the proliferation of user input utilities that record and execute user input sequences on behalf of a user of a data processing system and the wide variety of media output devices, a new approach can be applied for increasing the propensity of use for these user input utilities.

It is therefore one aspect of the present invention to provide an improved data processing system.

It is another aspect of the present invention to provide an improved method of, and system for, interfacing a data processing system to an input device.

It is yet another aspect of the present invention to provide a method of detection of a sequence of manual user inputs for which a prerecorded or automatic procedure exists.

It is yet another aspect of the present invention to provide a method of notifying a user that a prerecorded or automatic procedure exists that may be executed in lieu of a sequence of manual user inputs.

It is yet another aspect of the present invention to provide a method of such notification without obstructing the visual presentation of a currently executing application.

It is yet another aspect of the present invention to provide a method of negative reinforcement to users who manually enter a sequence of user inputs when a prerecorded or automatic procedure exists and may be executed in lieu of the sequence of user inputs.

The foregoing aspects are achieved as is now described. A method and system are disclosed for the monitoring and'processing of user inputs. User inputs can be manually entered into a data processing system via various media devices, such as voice recognition peripherals, electronic mouse peripherals, touch screens, and keyboard input devices. Manual user inputs performed by the user are monitored and compared to preexisting user input macros which can perform the manual user inputs on behalf of the user. Upon detection of manual user inputs that are identical or similar to those recorded in a preexisting macro, a user is notified of the preexisting macro that can perform the sequence of manual user inputs. In one depicted embodiment, user inputs are compared to preexisting user defined macros. Thereafter, the user is alerted when the manual user inputs could have been executed by a preexisting macro. A service component allows the notification to take place via an alternative media not used by the macro, thus avoiding the propensity of obstructing the media used by the preexisting macro.

The present invention has the advantage of providing a user of a data processing system a means of notification of unnecessary manual user inputs being executed by a user.

The present invention has the still further advantage of providing a user of a data processing system a means in which negative reinforcement can be imposed on a user who failed to utilize preexisting user input macros.

The present invention has the still further advantage of allowing the user's manual user inputs to initiate response actions on alternate non-obstructing media devices.

The present invention has the still further advantage of allowing for recording of statistical information on the use of prerecorded sequences of user inputs.

The novel features believed characteristic of the invention are set forth in appended claims. The invention itself however, as well as a preferred mode of use, further aspects and advantages thereof, will best be understood by reference to the following detailed description of an illustrative embodiment when read in conjunction with the accompanying drawings, wherein:
Figure 1 is a pictorial block diagram of a data processing system used in performing the method of the present invention and forming part of the apparatus of the present invention;
Figure 2 is a flow chart illustrating the operations preferred for selecting and querying a sequence of user inputs associated with a particular response action; and
Figure 3 is a flow chart illustrating the operations preferred for detection of a sequence of user inputs and activation of an associated response action upon detection of the sequence of user inputs.

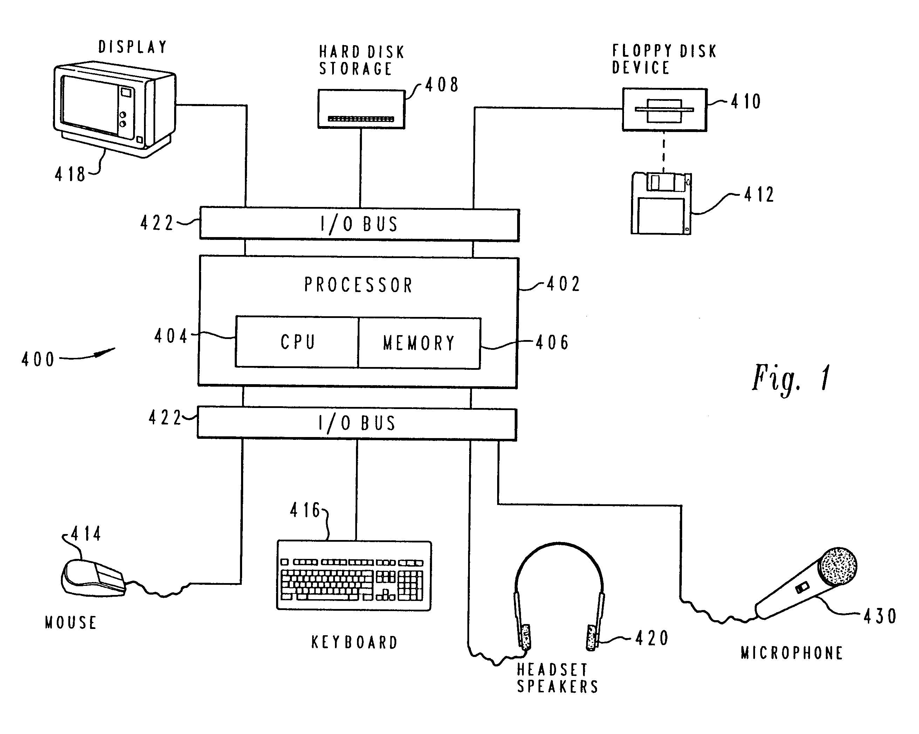

Referring first to Figure 1, there is illustrated in a pictorial block diagram form, a data processing system 400 according to the present invention. The data processing system 400 includes a processor 402, which includes a central processing unit (CPU) 404, and a memory 406. Additional memory, in the form of a hard disk file storage 408 and a floppy disk drive device 410, may be connected to the processor 402 via an Input/Output (I/O) Bus, 422. The I/O Bus allows a plurality of devices to interface with the processor via specific device adapters, e.g., video adapters, disk controllers, voice recognition processors, etc. Floppy disk device 410 may receive a diskette 412 which has computer program code recorded thereon that implements the present invention in the data processing system 400. The data processing system 400 may also include user interface hardware, such as a mouse 414, head-set speakers 420, microphone 430 and a keyboard 416 for allowing user input to the processor 402 and a display 418 for presenting visual data to the user.

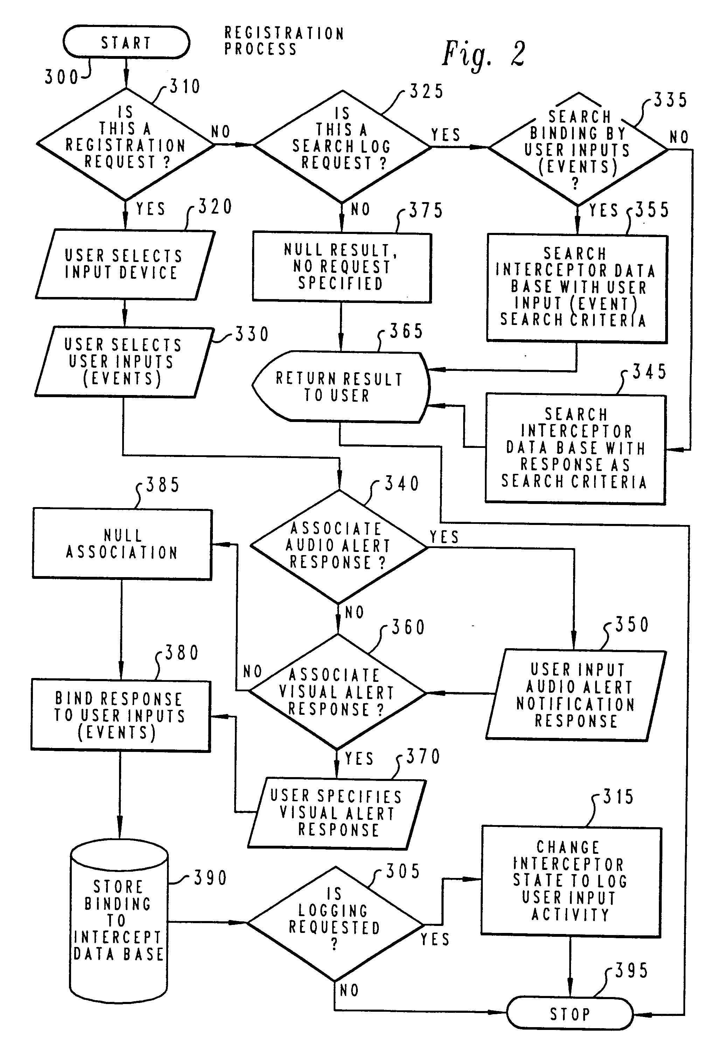

Referring now to Figure 2 through Figure 3, flow charts illustrating operations preferred in carrying out the present invention are shown. In the flow charts, the graphical conventions of a diamond for a test or decision, a parallelogram for an input or output process, a cylinder for a data base access process and a rectangle for a system process are used. These conventions are well understood by those skilled in the art, and the flow charts are sufficient to enable one of ordinary skill to write code in any suitable computer programming language.

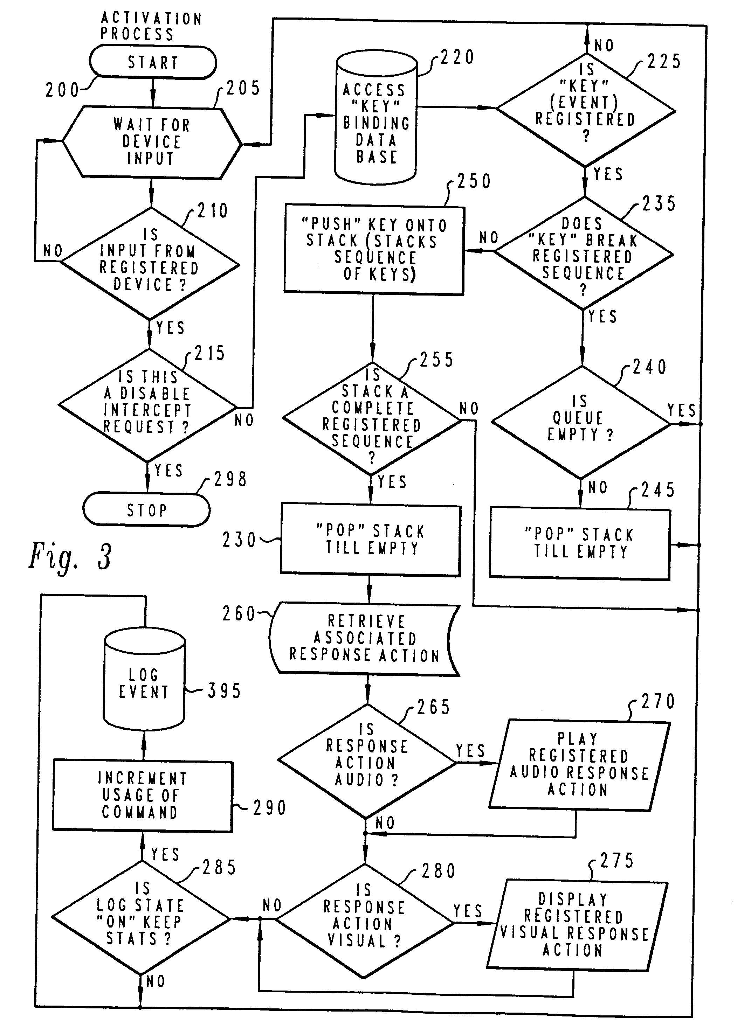

The operations preferred in carrying out the present invention are implemented as two processes or programs, a Registration Process and an Activation Process. The Registration Process, illustrated in Figure 2, allows a user to define a sequence of user input events that should activate a particular response action. For example, if the user inputs for a delete page operation are manually entered when a keystroke macro exist, the user can define a response action such as an audio message of "Macro Alt-Delete exist for deleting a page" to be played. This registration process also allows the user to query the status and definitions of previously registered sequences of user inputs. The Activation Process, illustrated in Figure 3, detects a sequence of user inputs defined by the Registration Process and activates an associated response action corresponding to the sequence of user inputs.

Referring now to Figure 2, which illustrates the operations preferred in carrying out the Registration Process portion of the invention, after the start 300 of the program, decision block 310 determines if a user request is for registering a new sequence of user inputs. If the request is for registering a new sequence of user inputs, then the process continues to process block 320 where a user selects a particular input device. These user inputs may occur in a data processing system or in devices attached to the data processing system for allowing user inputs. These input devices may include keyboards, mice, light pens, touch screens, track balls, telephones, scanners and voice recognition peripherals, etc. Thereafter, the user selects a sequence of user inputs as illustrated in process block 330. Thereafter, the process continues to decision block 340 which determines if the user prefers a response action to be an audio response when the user advertently or inadvertently enters a sequence of user inputs for which an associated procedure existed for the sequence of user inputs. If the response action desired is an audio response, then process block 350 allows the user to specify the audio response that should be activated upon the user manually entering a sequence of user inputs for which a procedure exists. Such an audio response may be specified by either recording by use of analog to digital conversion devices, by selecting text to be converted by a Text-To-Speech process, by selecting a prerecorded audio response or any other mechanism capable of producing an audio response. If the user does not associate an audio response action in decision block 340, or after the user has specified an audio response action in process block 350, control passes to decision block 360 where the user is given the opportunity to specify a visual response action upon detection of a sequence of user inputs. If the user decides not to associate a visual response action, then process block 385 associates a Null response with the sequence of user inputs. A Null response indicates that no response action is desired upon detection of the user inputs that match a preexisting macro. Note, that in the case where the user requests neither an audio response action nor a visual response action, a Null response may be made. A Null response may be desired if the user merely wishes to log the user inputs. A user may wish this feature to analyze the statistical data of user inputs to determine methods for subsequent registrations.

Returning now to decision block 360, if the user decides to associate a visual response action, then control passes to process block 370 which allows the user to specify a visual device and visual representation that should be associated with and presented upon detection of the associated sequence of user inputs. Those skilled in the art recognize that a plurality of devices can be utilized for the display of visual information, such as visual display tubes, printers, Light Emitting Diodes, etc. Although the preferred embodiment addresses either visual or audio response actions, this should not be construed in a limiting sense. Any media output device can be utilized for the practice of response actions of the invention.

After selection of the appropriate response actions and user input actions in process block 370 or process block 385, control passes to process block 380 which binds response actions with the registered sequence of user inputs. In this binding, the response action is associated with the sequence of user input events. Thereafter, process block 390 stores the binding in an Interceptor Data Base. This Interceptor Data Base allows the Activation Process to compare the registered sequence of user inputs with those user inputs manually entered by a user. After the binding is stored by process block 390, the process continues to decision block 305 which allows the user to specify statistical logging for detected matches of sequences of user inputs. If the user selects statistical logging, then control passes to process block 315 which sets the Interceptor State Flag to TRUE to log matches of sequences of user inputs. The Interceptor State Flag indicates to the Activation Process if statistical logging should apply upon detection of a registered sequence of user inputs. After the user has requested no logging in decision block 305 or after the user has specified logging in decision block 315, the process terminates at block 395.

Returning now to decision block 310, if the request received by the Registration Process is not a request for registration of a new sequence of user inputs, then decision block 325 determines if the user's request is a search request of the currently defined bindings in the Interceptor Data Base. A search request allows the user to view previously defined registration bindings defining associations of sequences of user inputs to response actions. If the request is neither a registration request nor a search request, then control passes to process block 375 which creates an appropriate message for the user that an invalid request was entered. Thereafter, process block 365 provides the message to the user. Thereafter, the program stops at block 395.

Returning now to decision block 325, if the request is a search request, then process block 335 determines if the search should be based on the user input portion of the binding. In such case, the user selects user inputs upon which a search request is based and a search request is made to the Interceptor Data Base as depicted in block 355. Thereafter, responses from the Interceptor Data Base are made available to the user as depicted by process block 365. Thereafter, the process terminates at block 395.

Returning now to decision block 335, if the search is not based on the user input portion of the binding, then the search is based on the response action portion of the binding, and a search request based on the response action passes to process block 345 which allows the user to select the response action whereby a search request is generated to the Interceptor Data Base. Thereafter, responses from the Interceptor Data Base are made available to the user as depicted by process block 365.

Referring next to Figure 3, which illustrates the operations preferred in carrying out the Activation Process portion of the present invention, after the start, block 200 of the program, process block 205 awaits receipt of a user input from an input device. This input device may be any input device attached to the data processing system. Upon receipt of a user input from an input device, block 210 determines if the user input is from a registered input device, as previously depicted in Figure 2. If the user input is not from a registered input device, then the program loops back to process block 205 which awaits a user input from an input device.

Returning now to decision block 210, if the user input is from a registered input device, then decision block 215 determines if the user input specified by the input device is for disabling the Activation Process. If the user input is for disabling the Activation Process, then the process terminates at process block 298.

Returning now to decision block 215, if the user input is not for disabling the Activation Process, process block 220 accesses the Interceptor Data Base. Thereafter, decision block 225 determines if the user input received is a key. A "key" is a user input that is registered in the Interceptor Data Base, such as a particular keystroke being pressed on a keyboard or a particular mouse event occurring. If the key is not of a registered type, as defined in the Interceptor Data Base, then the program loops back to process 205 to await a user input.

Returning now to decision block 225, if the user input is a key, that is if the user input is part of a registered sequence of user inputs, then decision block 235 determines if the key disrupts a currently existing sequence of keys. For example, the keyboard sequence "F2-F7-A-F10" may be registered. If previous keys detected include F2 and F7 in sequence, then by the user pressing F9 next, the registered sequence would be disrupted. However, if the user subsequently entered A and F10, the sequence will be completed. Note that if a key does not appear at the beginning of a sequence, then it also disrupts a potential sequence. For example, if F9 is the first key depressed, then F9 can be assumed as breaking the sequence, given that F9 does not appear at the beginning of a registered sequence. If the key disrupts the sequence, then decision block 240 determines if a stack of currently pending keys is empty. The currently pending stack is the set of sequence keys that are presently stored on the stack. As in the example stated, keys F2 and F7 would be on the stack. If the stack is empty, this signifies there is no current partial sequence of keys that has a propensity toward being a registered sequence, and control passes to process block 205 to await a user input. If the stack is not empty, this signifies that there was a sequence of keys entered previously that had a propensity to becoming a registered sequence, and process block 245 empties the stack. Thereafter, control passes to process block 205, where again the process awaits a user input from an input device.

Returning now to decision block 235, if the key does not disrupt a registered sequence, then process block 250 places the key on to the stack. Thereafter, decision block 255 determines if the stack is a complete sequence of keys matching a registered sequence. If the stack is not a completed sequence, meaning that additional keys are needed, then control passes to process block 205 which awaits for a user input.

Returning now to decision block 255, if the stack is a complete sequence of keys matching a registered sequence, then process block 230 empties the stack. Thereafter, process block 260 retrieves the associated response action from the Interceptor Data Base. Thereafter, decision block 265 determines if the response action is an audio response. If the response action is an audio response, then processing block 270 activates and plays to the user the particular audio response action. After decision block 265 determines the response action is not an audio response, or after process block 270 activates an audio response, decision block 280 determines if the response action is a visual response. If decision block 280 determines the response action is a visual response, then processing block 275 activates and displays to the user a visual response action. Note that both audio response and visual response action may be executed simultaneously. After decision block 280 determines the response action is not a visual response, or after process block 275 activates a visual response, decision block 285 determines if statistical logging is to occur. If statistical logging is to occur, indicated by having the Interceptor State Flag set to a TRUE state, then process block 290 identifies the sequence of keys and increments a count corresponding to the sequence of keys manually performed by the user. Thereafter, processing block 395 logs the identification and count to a statistical log. Thereafter, the program returns to process block 205.

Returning now to decision block 285, if statistical logging is not to occur, then the program returns to process block 205.

## Claims

1. A method of informing a user of a data processing system, that a first sequence of user inputs may be entered in lieu of a second sequence of user inputs, said method comprising the steps of:
associating the first sequence of user inputs with the second sequence of user inputs;
detecting an entry of the second sequence of user inputs; and
informing the user that the first sequence of user inputs may be entered in lieu of the second sequence of user inputs.

2. The method of claim 1, wherein the step of associating the first sequence of user inputs with the second sequence of user inputs comprises the steps of:
storing the first sequence of user inputs and the second sequence of user inputs in a table, wherein the first sequence of user inputs may be retrieved by searching on the second sequence of user inputs; and
storing a response action in the table, wherein the response action may be retrieved by searching on the second sequence of user inputs.

3. The method of claim 2, wherein the step of detecting an entry of the second sequence of user inputs comprises the steps of:
intercepting a sequence of user inputs; and
comparing the sequence of user inputs to the second sequence of user inputs.

4. The method of claim 3, wherein the step of informing the user that the first sequence of user inputs may be entered in lieu of the second sequence of user inputs comprises the steps of:
retrieving the response action if the sequence of user inputs matches the second sequence of user inputs; and
executing the response action.

5. The method of claim 4, wherein the step of executing the response action comprises:
directing the response action to a media that offers no obstruction to an application program into which the sequence of user inputs were entered.

6. An apparatus for informing a user of a data processing system, that a first sequence of user inputs may be entered in lieu of a second sequence of user inputs, said apparatus comprising:
means for associating the first sequence of user inputs with the second sequence of user inputs;
means for detecting an entry of the second sequence of user inputs; and
means for informing the user that the first sequence of user inputs may be entered in lieu of the second sequence of user inputs.

7. The apparatus of claim 6, wherein the means for associating the first sequence of user inputs with the second sequence of user inputs comprises:
means for storing the first sequence of user inputs and the second sequence of user inputs in a table, wherein the first sequence of user inputs may be retrieved by searching on the second sequence of user inputs; and
means for storing a response action in the table, wherein the response action may be retrieved by searching on the second sequence of user inputs.

8. The apparatus of claim 7, wherein the means for detecting an entry of the second sequence of user inputs comprises:
means for intercepting a sequence of user inputs; and
means for comparing the sequence of user inputs to the second sequence of user inputs.

9. The apparatus of claim 8, wherein the means for informing the user that the first sequence of user inputs may be entered in lieu of the second sequence of user inputs comprises:
means for retrieving the response action if the sequence of user inputs matches the second sequence of user inputs; and
means for executing the response action.

10. The apparatus of claim 9, wherein the means for executing the response action comprises:
means for directing the response action to a media that offers no obstruction to an application program into which the sequence of user inputs were entered.
